# EUROPEAN PATENT SPECIFICATION

(11) **EP 2 292 470 B1**
(45) Date of publication and mention of the grant of the patent: **09.05.2012**
(21) Application number: 10174962.0
(22) Date of filing: 01.09.2010
(51) Int. Cl.: B60R 9/048, B60R 9/06, B60R 9/10

(54) **Clamping device for a cycle carrier**
Klemmvorrichtung für ein Fahrradträger
Dispositif de serrage pour une porte-bicyclette

(30) Priority: 02.09.2009 NL 2003426
(43) Date of publication of application: 09.03.2011
(73) Proprietor: Twinny Load B.V., 8161 PH Epe (NL)
(72) Inventor: Vreeling, Gerhardus Nicolaas, 7391 PL, Twello (NL); Bouwknegt, Janwillem, 2317 KA, Leiden (NL); Maurice, Ingmar, 1018 AK, MAURICE, Ingmar (NL)
(74) Representative: Dokter, Hendrik Daniel

(56) References cited:
- EP-A1- 1 106 437
- DE-A1- 19 826 077
- US-A- 5 025 932
- US-A- 5 658 119
- US-A1- 2008 006 667
- Twinny Load: "Twinny Load traditional CK; Montagevoorschrift en gebruiksaanwijzing" , [Online] 24 July 2009 (2009-07-24), XP002573463 Retrieved from the Internet: URL:http://www.twinnyload.nl/files/files/N ederlands%202007%20Swing%20CK.pdf> [retrieved on 2010-03-08] -& DIGITAL DETECTIVE.CO.UK: "WebDate - screenshot establishing the date of the lastest modification of the webpage of XP002573463" , 1 March 2010 (2010-03-01), XP002573551 WEBDATE Retrieved from the Internet: URL:http://www.digital-detective.co.uk/> [retrieved on 2010-03-01]

## Description

The invention relates to a clamping device for a cycle carrier provided with at least one cycle channel, comprising a post which can be placed substantially vertically and which is provided with clamping means for clamping a crank of a cycle, wherein the post is provided with displacing means for at least partially displacing the clamping means in a direction transversely of the longitudinal direction of the cycle channel.

This clamping device is particularly intended for use in a removable cycle carrier which can be fixed to a tow hook of an automobile, although it can for instance also be used in a cycle parking area or on the roof construction of an automobile.

Such a clamping device is known from the document "Twinny Load traditional CK; Montagevoorschrift en gebruiksaanwijzing (published as PDF on the internet on 24.07.2011), according to the preamble of claim 1.

The Netherlands patent application no. 1003659 discloses a clamping device which comprises a post for fixing to a central beam of a cycle carrier, wherein the clamping means comprise a support body for allowing a crank axle housing of a cycle to rest thereon and for allowing a crank of this cycle to support thereagainst. With the support body is achieved that the weight of a cycle resting thereon with its crank axle housing is supported substantially by the post, while the crank of the relevant cycle supports against the support body. The known clamping device is applied in combination with U-shaped receiving channels for the wheels of a cycle in a manner such that the weight of a cycle presses on these receiving channels and movements of this cycle in its longitudinal direction are prevented by an inclining position of the receiving channels, while movements of the cycle in transverse direction are blocked by the clamping parts round the crank.

In a cycle carrier provided with the known clamping device the weight of a cycle clamped with the clamping device is supported substantially by the post, wherein the wheels of the cycle are anchored in the cycle channel. As a result a mechanical tension may develop in transverse direction of the cycle, which can result in the longer term in weakening of the frame of the cycle. It is known to remove such a tension by coupling the parts of the cycle channel in which the wheels are anchored, i.e. the end parts of this cycle channel, displaceably in transverse direction of this channel to the other part of the cycle channel. A cycle channel with transversely displaceable end parts is however unsuitable for accommodating a relatively heavy cycle, particularly a cycle which is motorized or motor-assisted.

It is an object of the invention to provide a clamping device for a cycle carrier, using which a cycle to be anchored in a cycle channel can be clamped in simple and rapid manner without tension.

It is a further object to provide a clamping device which is suitable for clamping any type of cycle, irrespective of whether the cycle is motorized or motor-assisted.

These and other objects are achieved with a clamping device according to claim 1.

A cycle channel is here understood to mean any assembly of elements lying mutually in line for carrying and anchoring the wheels of a cycle to be placed in these elements.

The displacing means achieve that a post placed on a cycle carrier can be displaced such that the wheels of a cycle whose crank is clamped by the clamping means of the post can be placed in the cycle channel by displacing the post in a manner such that they can be anchored there without mechanical tensions occurring in the frame.

By tilting the post at least a part of this post is placed closer to or further away from the cycle channel, this depending on the direction of tilting.

In an advantageous embodiment the pivot means are provided on the underside of the post.

Pivot means on the underside of the post provide the advantage that the greatest possible displacement of the upper part of the post (in radial direction) can be realized when the post is tilted through a determined angle.

The operating means comprise for instance a lever coupled rigidly to the post.

The lever is for instance provided with a screw spindle which is coupled pivotally thereto and which can be coupled pivotally to the cycle carrier.

In this embodiment the rotation of the screw spindle results in a tilting of the lever, and thereby in a tilting of the post coupled thereto.

In a practically advantageous embodiment the clamping means comprise a support body for allowing a crank of this cycle to support thereagainst.

In a preferred embodiment the support body is tiltable relative to the post on a shaft extending transversely of the longitudinal direction of the post. This tilting shaft is for instance formed by a solid rod or is defined for instance by the connecting line between points on which the support body is rotatably suspended.

The option of tilting the support body optimizes connection thereof to the relevant crank of the cycle.

An embodiment of the clamping device according to the invention is provided with locking means for locking a tiltable support body against tilting.

Such locking means are applied for instance after an optimal connection of a crank to the support body has been effected to enhance the stability of a cycle clamped with its crank in the clamping device.

In a clamping device the clamping means according to the invention preferably comprise coupling means for releasable coupling of the crank of a cycle to the support body, which coupling means are more preferably tiltable relative to the post on a shaft extending transversely of the longitudinal direction of the post.

The option of tilting of the coupling means contributes toward an optimal connection of the support body to the relevant crank of the cycle, and thereby to the stability of a clamped cycle.

In preference the post has a U-shaped cross-section and the support body is arranged tiltably about a shaft extending through the two legs of this U-shape.

This latter embodiment comprises for instance a wedge-shaped body displaceable in lengthwise direction of the post between the support body and the connecting leg of the U-shape in order to lock the support body against tilting.

The clamping device with U-shaped post comprises in yet another exemplary embodiment a coupling element which can be anchored releasably to the legs of the U-shape for releasable coupling of the crank of a cycle to the support body, which coupling element comprises for instance a rigid bracket provided with screw means or a spring construction for respectively pressing or pressing under spring tension onto the support body a cycle crank enclosed respectively by this bracket or by this spring construction and a support body.

The invention will be elucidated hereinbelow on the basis of an exemplary embodiment, with reference to the drawings.

In the drawings:
Fig. 1 is a perspective view of two clamping devices according to an embodiment of the invention, and
Fig. 2 is a perspective view of a part of a cycle carrier provided with the clamping devices shown in fig. 1.

Corresponding components are designated in the figures with the same reference numerals.

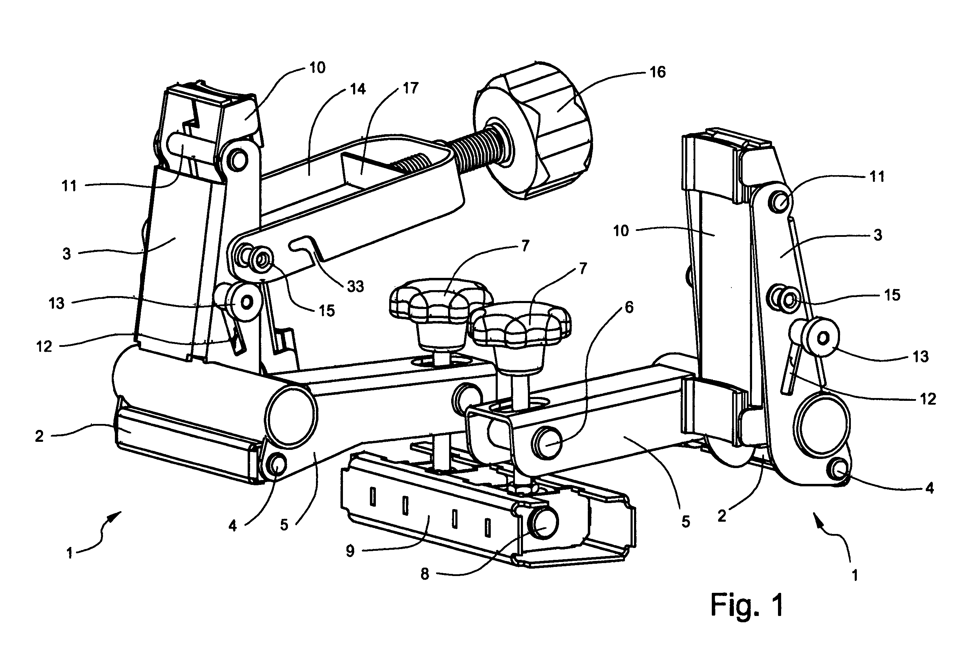

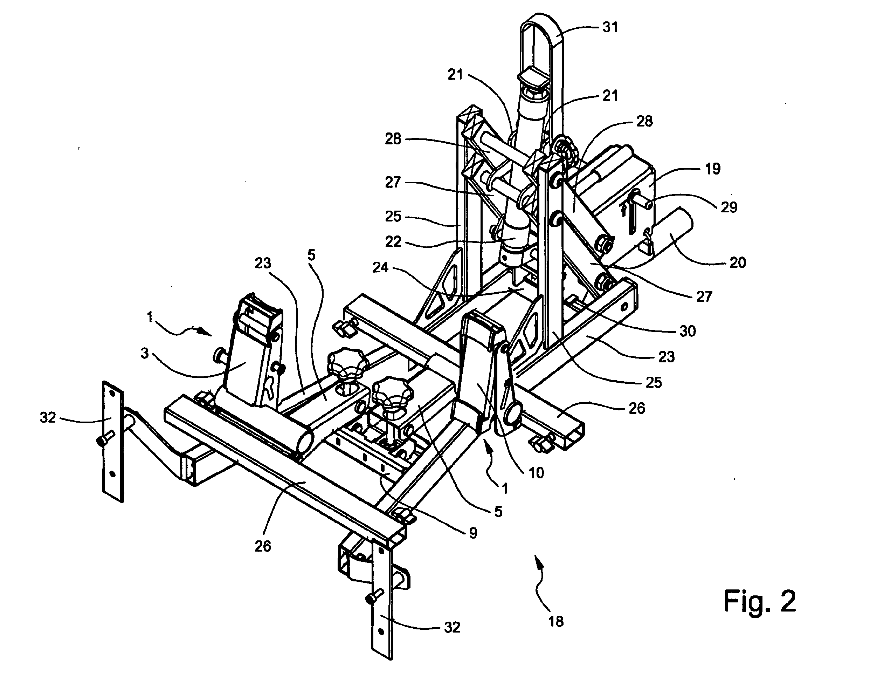

Fig. 1 shows two clamps 1 which can be rigidly coupled along a coupling profile 2 to a corresponding part of a profile of a cycle carrier (shown in fig. 2). Clamps 1 each comprise a post 3 of U-shaped cross-section which is coupled on its underside to coupling profile 2 for pivoting about a shaft 4, and which is coupled rigidly to a lever 5. Levers 5 are each provided with a screw spindle 7 which is coupled at one end to the respective lever 5 for pivoting about a shaft 6 and which is coupled at another end to a transverse profile 9 of the cycle carrier (shown in fig. 2) for pivoting about a shaft 9. Posts 3 each comprise a support body 10 which is suspended tiltably on a shaft 11 and which rests with an inclining rear side against an adjusting screw 13 which is displaceable through a slot 12 and using which the support body 10 can be locked within a determined range in this oblique position, in which support body 10 co-acts optimally with a cycle crank for clamping. A U-shaped bracket 14 for clamping the cycle crank onto support body 10 is releasably mounted for tilting, with one of two pairs of slots 33 provided for this purpose, on a pair of mounting stubs 15 protruding from one of the posts 3. The tilting of bracket 14 is determined by the tilting of support body 10. A crank enclosed by bracket 14 and support body 10 can be fixed using a screw 16 in a hole in bracket 14 provided with screw thread, wherein to prevent damage to the crank the screw 16 presses a non-co-rotating contact plate 17 lined for instance with rubber or a TPE onto the crank.

Fig. 2 shows clamping devices 1 of fig. 1, placed on a cycle carrier 18. Cycle carrier 18 is assembled from a fixed part and a movable part. The fixed part comprises, among other parts, a steel U-profile 19 with its open side directed downward, in which a coupling mechanism (not shown) which can be operated with a lever 29 is received for the purpose of coupling carrier 18 onto the ball of towing hook 20 of a vehicle. From the rear end of horizontal U-profile 19 extends a pair of vertical arms 21 between which a screw spindle 22 is suspended pivotally at a first outer end. The movable part of cycle carrier 18 comprises, among other parts, two parallel longitudinal beams 23 which are oriented in the longitudinal direction of the fixed part and which are coupled rigidly by transverse beams 9, 24, and two cycle channels 26 (shown without end parts). The fixed part and the movable part are coupled to respectively U-profile 19 and vertical columns 25 by two pairs of arms 27, 28 pivotable according to a parallelogram construction, wherein the lower pair of pivotable arms 27 is pivotally coupled to a second end of screw spindle 22. By means of screw spindle 22 and this parallelogram construction the movable part of cycle carrier 18 is displaceable between a lowest position (not shown) and a highest position shown in the figure, wherein transverse beam 24 drops with precise fit into a lock 30 in U-profile 19, as a result of which the movable part is locked against displacements in horizontal and upward vertical directions. The figure also shows a supporting bracket 31 and two mounting strips 32 for mounting thereagainst of a fitting for the legally required lights and registration plate.

## Claims

1. Clamping device (1) for a cycle carrier (18) provided with at least one cycle channel (26), comprising a post (3) which can be placed substantially vertically on this cycle carrier (18) and which is provided with clamping means (10, 14) for clamping a crank of a cycle, wherein the post (3) is provided with displacing means (5, 7) for at least partially displacing the clamping means (10, 14) in a direction transversely of the longitudinal direction of the cycle channel (26), **characterized in that** the displacing means comprise pivot means (4) and operating means (6, 7) for tilting the post (3) in a direction transversely of the longitudinal direction of the cycle channel (26).

2. Clamping device (1) as claimed in claim 1, **characterized in that** the pivot means (4) are provided on the underside of the post (3).

3. Clamping device (1) as claimed in any of the claims 1-2, **characterized in that** the operating means (4) comprise a lever (5) coupled rigidly to the post (3).

4. Clamping device (1) as claimed in claim 3, **characterized in that** the lever (5) is provided with a screw spindle (7) which is coupled pivotally thereto and which can be coupled pivotally to the cycle carrier (18).

5. Clamping device (1) as claimed in any of the claims 1-4, **characterized in that** the clamping means comprise a support body (10) for allowing a crank of the cycle to support thereagainst.

6. Clamping device (1) as claimed in claim 5, **characterized in that** the support body (10) is tiltable relative to the post (3) on a shaft (11) extending transversely of the longitudinal direction of the post (3).

7. Clamping device (1) as claimed in claim 6, **characterized by** locking means (12, 13) for locking the support body (10) against tilting.

8. Clamping device (1) as claimed in any of the claims 5-7, **characterized in that** the clamping means comprise coupling means (14, 16) for releasable coupling of the crank of a cycle to the support body (10).

9. Clamping device (1) as claimed in claim 8, **characterized in that** the coupling means (14) are tiltable relative to the post (3) on a shaft (15) extending transversely of the longitudinal direction of the post (3).

10. Clamping device (1) as claimed in any of the claims 5-7, **characterized in that** the post (3) has a U-shaped cross-section and the support body (10) is arranged tiltably about a shaft (11) extending through the two legs of this U-shape.

11. Clamping device (1) as claimed in claim 10, **characterized by** a coupling element (14, 16) which can be anchored releasably to the legs of the U-shape for releasable coupling of the crank of a cycle to the support body (10).

## Patentansprüche

1. Klemmeinrichtung (1) für einen mit mindestens einer Fahrradrinne (26) ausgestatteten Fahrradträger (18), umfassend eine im Wesentlichen senkrecht auf diesen Fahrradträger (18) anordenbare Säule (3), die mit Klemmmitteln (10, 14) zum Einklemmen einer Tretkurbel eines Fahrrades ausgestattet ist, wobei die Säule (3) mit Verschiebemitteln (5, 7) für das wenigstens zum Teil Verschieben der Klemmmittel (10, 14) in eine Richtung quer zu der Längsrichtung der Fahrradrinne (26) ausgestattet ist, **dadurch gekennzeichnet, dass** die Verschiebemittel Scharniermittel (4) und Bedienmittel (6, 7) zum Kippen lassen der Säule (3) in eine Richtung quer zu der Längsrichtung der Fahrradrinne (26) umfassen.

2. Klemmeinrichtung (1) nach Anspruch 1, **dadurch gekennzeichnet, dass** die Scharniermittel (4) an der Unterseite der Säule (3) bereitgestellt sind.

3. Klemmeinrichtung (1) nach einem der Ansprüche 1-2, **dadurch gekennzeichnet, dass** die Bedienmittel einen unbeweglich mit der Säule (3) gekoppelten Hebel (5) umfassen.

4. Klemmeinrichtung (1) nach Anspruch 3, **dadurch gekennzeichnet, dass** der Hebel (5) mit einer scharnierbar damit gekoppelten und scharnierbar mit dem Fahrradträger (18) koppelbaren Schraubspindel (7) ausgestattet ist.

5. Klemmeinrichtung (1) nach einem der Ansprüche 1-4, **dadurch gekennzeichnet, dass** die Klemmmittel einen Stützkörper (10) zum dagegen Stützen lassen einer Tretkurbel des Fahrrades umfassen.

6. Klemmeinrichtung (1) nach Anspruch 5, **dadurch gekennzeichnet, dass** der Stützkörper (10) gegenüber der Säule (3) um eine sich quer zu der Längsrichtung der Säule (3) erstreckende Achse (11) kippbar ist.

7. Klemmeinrichtung (1) nach Anspruch 6, **gekennzeichnet durch** Sicherungsmittel (12, 13) zum Sichern des Stützkörpers (10) gegen kippen.

8. Klemmeinrichtung (1) nach einem der Ansprüche 5-7, **dadurch gekennzeichnet, dass** die Klemmmittel Kupplungsmittel (14, 16) zur lösbaren Kopplung der Tretkurbel eines Fahrrades mit dem Stützkörper (10) umfassen.

9. Klemmeinrichtung (1) nach Anspruch 8, **dadurch gekennzeichnet, dass** die Kupplungsmittel (14) gegenüber der Säule (3) um eine sich quer zu der Längsrichtung der Säule (3) erstreckende Achse (15) kippbar sind.

10. Klemmeinrichtung (1) nach einem der Ansprüche 5-7, **dadurch gekennzeichnet, dass** die Säule (3) im Querschnitt eine U-Form aufweist und der Stützkörper (10) um eine sich durch die zwei Beine dieser U-Form erstreckende Achse (11) kippbar angeordnet ist.

11. Klemmeinrichtung (1) nach Anspruch 10, **gekennzeichnet durch** ein lösbar an die Beine der U-Form verankerbares Kupplungselement (14, 16) zur lösbaren Kopplung der Tretkurbel eines Fahrrades mit dem Stützkörper (10).

## Revendications

1. Dispositif de serrage (1) pour un porte-bicyclette (18) équipé d'au moins un canal pour bicyclette (26), comprenant un montant (3) qui peut être placé sensiblement verticalement sur ce porte-bicyclette (18) et qui est équipé de moyens de serrage (10, 14) pour serrer une manivelle d'une bicyclette, dans lequel le montant (3) est équipé de moyens de déplacement (5, 7) pour déplacer au moins partiellement les moyens de serrage (10, 14) dans une direction transversale à la direction longitudinale du canal pour bicyclette (26), **caractérisé en ce que** les moyens de déplacement comprennent des moyens de pivotement (4) et des moyens de commande (6, 7) pour incliner le montant (3) dans une direction transversale à la direction longitudinale du canal pour bicyclette (26).

2. Dispositif de serrage (1) selon la revendication 1, **caractérisé en ce que** les moyens de pivotement (4) sont prévus sur le côté inférieur du montant (3).

3. Dispositif de serrage (1) selon l'une quelconque des revendications 1 à 2, **caractérisé en ce que** les moyens de commande (4) comprennent un levier (5) rigidement couplé au montant (3).

4. Dispositif de serrage (1) selon la revendication 3, **caractérisé en ce que** le levier (5) est équipé d'une broche filetée (7) qui est couplée de façon pivotante à celui-ci et qui peut être couplée de façon pivotante au porte-bicyclette (18).

5. Dispositif de serrage (1) selon l'une quelconque des revendications 1 à 4, **caractérisé en ce que** les moyens de serrage comprennent un corps de support (10) pour permettre à une manivelle de la bicyclette de prendre appui contre celui-ci.

6. Dispositif de serrage (1) selon la revendication 5, **caractérisé en ce que** le corps de support (10) est inclinable par rapport au montant (3) sur un arbre (11) s'étendant transversalement à la direction longitudinale du montant (3).

7. Dispositif de serrage (1) selon la revendication 6, **caractérisé par** des moyens de blocage (12, 13) pour bloquer le corps de support (10) contre l'inclinaison.

8. Dispositif de serrage (1) selon l'une quelconque des revendications 5 à 7, **caractérisé en ce que** les moyens de serrage comprennent des moyens de couplage (14, 16) pour le couplage séparable de la manivelle d'une bicyclette au corps de support (10).

9. Dispositif de serrage (1) selon la revendication 8, **caractérisé en ce que** les moyens de couplage (14) sont inclinables par rapport au montant (3) sur un arbre (15) s'étendant transversalement à la direction longitudinale du montant (3).

10. Dispositif de serrage (1) selon l'une quelconque des revendications 5 à 7, **caractérisé en ce que** le montant (3) présente une section transversale en forme de U et le corps de support (10) est agencé de façon inclinable autour d'un arbre (11) s'étendant à travers les deux branches de cette forme en U.

11. Dispositif de serrage (1) selon la revendication 10, **caractérisé par** un élément de couplage (14, 16) qui peut être ancré de façon séparable aux branches de la forme en U en vue d'un couplage séparable de la manivelle d'une bicyclette au corps de support (10).
